# EUROPÄISCHE PATENTANMELDUNG

(11) **EP 0 840 414 A1**
(43) Veröffentlichungstag der Anmeldung: **06.05.1998**
(21) Anmeldenummer: 97250325.4
(22) Anmeldetag: 31.10.1997
(51) Int. Cl.: H02B 1/38

(54) **Schaltschrank mit einer versteiften Tür**

(30) Priorität: 31.10.1996 DE 19646545
(71) Anmelder: SIEMENS AKTIENGESELLSCHAFT, 80333 München (DE)
(72) Erfinder: Meyer, Heike, 60316 Frankfurt (DE)

(57) **Zusammenfassung**

Eine Tür (2) eines Schaltschrankes (1) ist zur Verbesserung der Stabilität mit einem stabförmigen Abschnitt (7) eines Profilmaterials mit hoher Biegesteifigkeit versehen. Der Abschnitt erstreckt sich im wesentlichen über die gesamte Höhe der Tür (2) nahe der den Scharnieren (3) der Tür (2) gegenüberliegenden Kante (5). Der Abschnitt (7) kann aus einem Profilmaterial mit beliebigen geeignetem Querschnitt, z. B. ein geschlossenes Hohlprofil oder ein massives Winkel- oder H-Profil bestehen und kann zugleich zur Befestigung einer Tragschiene oder eines Geräteträgers verwendet werden.

## Beschreibung

Die Erfindung betrifft einen Schaltschrank mit einer an Scharnieren gehaltenen Tür und einem an der Innenseite der Tür angebrachten Versteifungselement, zu dessen Befestigung an der Innenseite der Tür Befestigungselemente vorgesehen sind.

Ein Schaltschrank dieser Art ist durch die EP 0 538 856 bekanntgeworden. Das Versteifungselement hat dabei die Gestalt eines Rahmens, der aus Hohlprofilelementen und diese verbindenden Eckstücken gebildet ist. Als Befestigungselemente dienen Schrauben in Verbindung mit Gewindebuchsen, die auf die Innenseite der Tür aufgeschweißt sind. Ähnliche Versteifungsrahmen sind durch die DE 41 03 785 A1 und durch DE 88 13 904 U1 bekanntgeworden.

Alle bekannten Versteifungsrahmen haben die Aufgabe, eine besonders bei Türen großer Höhe auftretende gewisse Instabilität zu vermindern, die sich im geöffneten Zustand in einer Neigung zu elastischen Biegeschwingungen äußert. Diese können vom Benutzer unbeabsichtigt beim Öffnen der Tür angeregt werden, wenn beispielsweise mehrere Verschlußelemente nicht gleichzeitig freigegeben werden oder wenn die Tür mit gummielastischen Dichtelementen versehen ist und diese örtlich an ihren Gegenflächen haften.

An sich wäre es möglich, die Türen von Schaltschränken durch Verwendung profilierter Bleche, doppelwandige Ausbildung oder Verwendung dickerer Bleche so steif auszubilden, daß die beschriebenen Biegeschwingungen nicht oder nur in geringem Maße auftreten können. Offensichtlich würde dies einen erheblichen Aufwand darstellen, der die Herstellungskosten der Schaltschränke nicht unbeträchtlich erhöht. Die erwähnten Versteifungsrahmen stellen demgegenüber bereits eine Verbesserung dar, da sie es gestatten, die Türen aus normalem, relativ dünnem Blech herzustellen zur Versteifung gesondert herstellbare Teile mit insgesamt geringem Volumen zu benutzen. Dennoch stellen Versteifungsrahmen einen Aufwand dar, der einer standardmäßigen Anwendung bei Schaltschränken entgegensteht.

Der Erfindung liegt hiervon ausgehend die Aufgabe zugrunde, eine Versteifung der Türen gegen unerwünschte Biegeschwingungen mit wesentlich geringerem Aufwand als bisher zu erzielen.

Diese Aufgabe wird gemäß der Erfindung dadurch gelöst, daß als Versteifungselement wenigstens nahe der den Scharnieren gegenüberliegenden Kante der Tür ein stabförmiger Abschnitt eines Profilmaterials mit hoher Biegesteifigkeit angebracht ist. Somit beträgt im Vergleich zu den bisherigen Versteifungsrahmen der Aufwand an Material nur etwa ein Drittel, wenn man davon ausgeht, daß das neue Versteifungselement aus einem ähnlichen Halbzeug hergestellt wird, wie es für die bisherigen Teilstücke der Versteifungsrahmen zum Einsatz kommt. Versuche zeigen, daß die Wirkung des neuen Versteifungselementes dennoch ausreichend ist, insbesondere wenn sich im Rahmen der Erfindung ein stabförmiger Abschnitt des Profilmaterials im wesentlichen über die gesamte Höhe der Tür erstreckt.

Die bisher eingesetzten Versteifungsrahmen sind im Hinblick auf ihren Kostenaufwand so ausgebildet worden, daß sie zugleich zur Befestigung von Geräteträgern oder Tragschienen benutzt werden können, wenn kleinere Geräte an der Innenseite der Tür angebracht werden sollen. Die gleiche Funktion ist auch bei der Anwendung der Erfindung möglich, wenn nahe der mit den Scharnieren versehenen Kante der Tür ein weiterer stabförmiger Abschnitt des Profilmaterials angebracht ist.

Zur Herstellung der bisher bekannten Versteifungsrahmen werden geschlossene oder offene Profile aus Blech eingesetzt. Die gleichen Halbzeuge eignen sich auch für die Zwecke der Erfindung. Darüber hinaus kann als Profilmaterial ein winkliges Vollprofil mit zwei parallelen Schenkeln eingesetzt werden, von denen der eine Schenkel zur Auflage an der Türinnenfläche dient und der andere Schenkel zur Auflage eines Geräteträgers o.ä. dient. Profile dieser Art sind in einer Reihe geeigneter Ausführungen handelsüblich und daher preiswerter als speziell gefertigte Profile verfügbar.

Die Erfindung wird im folgenden anhand der in den Figuren dargestellten Ausführungsbeispiele näher erläutert.

Die Figur 1 zeigt scheamtisch einen Schaltschrank mit geöffneter Tür in einer Frontansicht.

In den Figuren 2 und 3 sind jeweils im Schnitt als vergrößerte Einzelheit ein Teil der Tür eines Schaltschrankes und ein Pofilabschnitt gezeigt, wobei die Verbindung des Profilabschnittes mit der Tür in den genannten Figuren unterschiedlich ausgebildet ist.

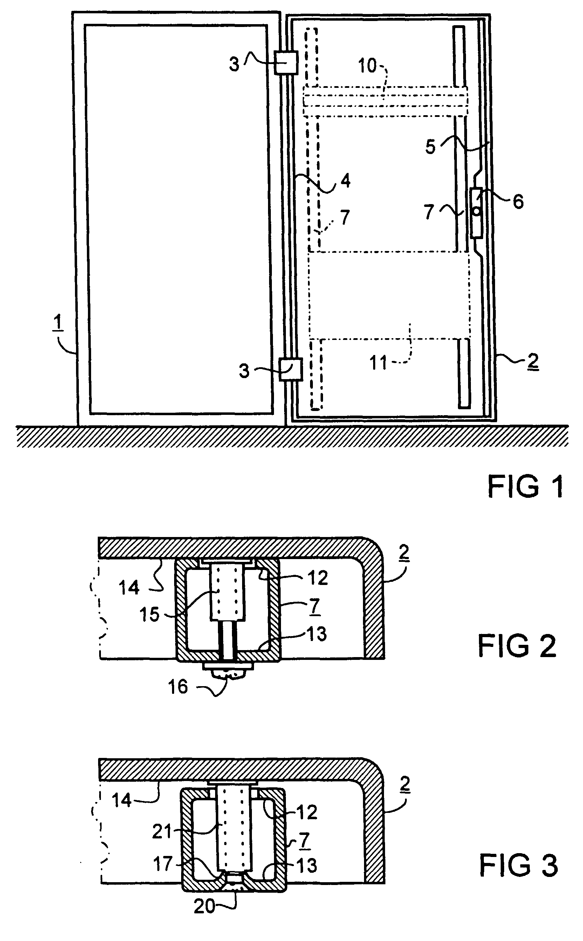

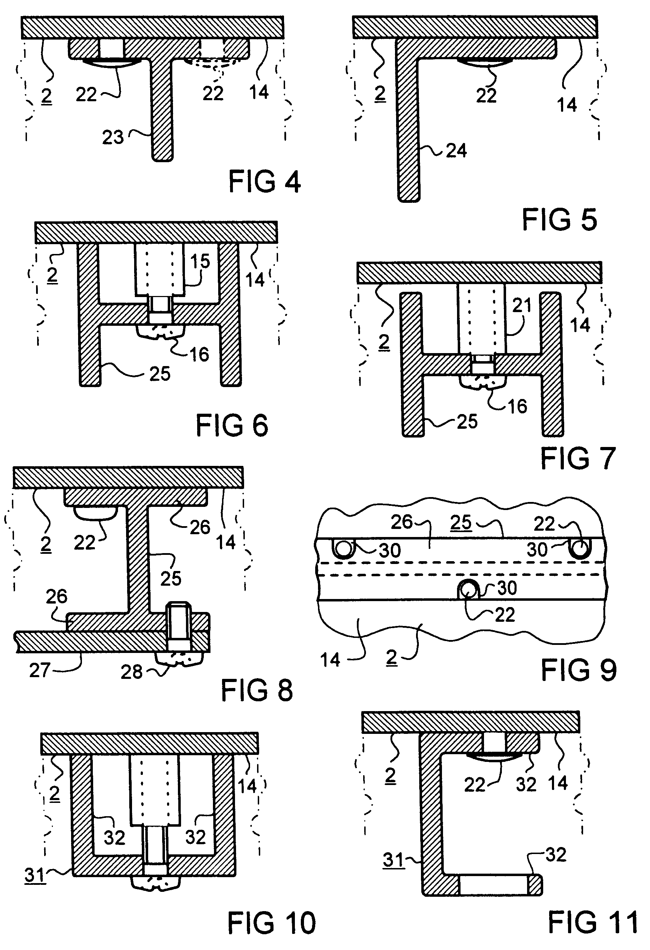

In einer den Figuren 2 und 3 entsprechenden Darstellung zeigen die Figuren 4 bis 8 sowie 10 und 11 weitere Ausführungsbeispiele von Profilabschnitten.

Die Figur 9 veranschaulicht die Anordnung von Befestigungselementen bei Verwendung eines H-Profiles etwa gemäß der Figur 8.

Der in der Figur 1 gezeigte Schaltschrank 1 weist eine geöffnet dargestellte Tür 2 auf, die an Scharnieren 3 gehalten ist. Die Tür 2 ist allseitig kuchenblechartig abgekantet und ist an ihrer der scharnierseitigen Kante 4 gegenüberliegenden schloßseitigen Kante 5 mit einem Stangenschloß 6 versehen.

Zur Versteifung gegen unerwünschte Biegeschwingungen ist die Tür 2 mit einem stabförmigen Abschnitt 7 eines Profilmaterials mit einer biegesteifen Querschnittsform versehen. Der Abschnitt 7 erstreckt sich im wesentlichen über die gesamte Höhe der Tür 2 und befindet sich nahe der schloßseitigen Kante 5. Unter Umständen kann der Abschnitt 7 ausreichend sein, die Tür 2 so weit zu versteifen, daß keine störende Instabilität auftritt. Eine weitere Versteifung ist dadurch zu erreichen, daß ein weiterer gleicher Abschnitt 7 aus dem gleichen Profilmaterial entsprechend der strichpunktierten Darstellung in der Figur 1 nahe der scharnierseitigen Kante 4 der Tür 2 angebracht wird. Zugleich entsteht durch diese Anordnung eine einfache Möglichkeit zur Befestigung von Tragschienen 10 oder Geräteträgern 11, wie sie in der Figur 1 gleichfalls strichpunktiert angedeutet sind.

In der Figur 2 sind Einzelheiten des Abschnittes 7 und ihrer Befestigung gezeigt. Der Abschnitt 7 weist ein geschlossenes Hohlprofil aus Blech auf, dessen gegenüberliegende Schenkel 12 und 13 mit Durchgangslöchern für Zwecke der Befestigung versehen sind. Als Befestigungselemente dienen in bekannter Weise auf die Innenseite 14 der Tür 2 aufgeschweißte Gewindebuchsen 15 und in diese eingreifende Schrauben 16.

Bei der weitgehend der Figur 2 ähnlichen Anordnung gemäß der Figur 3 ist der Schenkel 13 mit Durchzügen 17 versehen, um Schrauben 20 mit Senkkopf verwenden zu können. Ferner werden gegenüber der Figur 2 verlängert ausgebildete Gewindebuchsen 22 verwendet, an deren Stirnfläche sich der Abschnitt 7 mit seinen Durchzügen 17 derart abstützt, daß ein geringer Zwischenraum zwischen dem gegenüberliegenden Schenkel 12 und der Innenseite 14 der Tür 2 verbleibt. Auf diese Weise wird vermieden, daß die Tür 2 im Bereich der Gewindebuchsen 21 deformiert wird, wie dies bei der Ausführung gemäß der Figur 2 bei unachtsam starkem Anziehen der Schrauben 16 nicht auszuschließen ist. Die Verwendung der Schrauben 20 mit Senkkopf hat den Vorteil, daß die Innenseite des Abschnittes 7 eben ist und sich als Auflagefläche für die in der Figur 1 gezeigten Tragschienen 10 bzw. Geräteträger 11 auch ohne entsprechende Freimachungen für Schraubenköpfe eignet.

Sollte im Einzelfall die Möglichkeit der Befestigung von Tragschienen oder Geräteträgern weniger von Bedeutung sein und demgegenüber die versteifende Wirkung im Vordergrund stehen, so kann vorteilhaft auf handelsübliche Profile zurückgegriffen werden, die in den Figuren 4 bis 11 veranschaulicht sind.

Zunächst zeigt die Figur 4 ein an der Tür 2 durch Niete 22 befestigtes T-Profil 23. Zur Nietung können Stifte aus einem geeigneten Werkstoff an der Innenseite 14 durch Schweißung befestigt werden.

Für den gleichen Zweck kann gemäß der Figur 5 ein mit der Tür 2 gleichfalls durch Niete zu verbindender Abschnitt 24 mit einem winkel- oder L-förmigen Profil benutzt werden.

Ferner sind mit guten Erfolg besonders verbindungssteife Abschnitte 25 mit H-förmigen Profil gemäß den Figuren 6 und 7 verwendbar. Dabei entspricht die Befestigung des Abschnittes in dem Beispiel gemäß der Figur 6 der Anordnung gemäß der Figur 2, während in der Figur 7 das in der Figur 3 dargestellte Prinzip der Befestigung Anwendung findet.

Abschnitte 25 mit H-Profil können jedoch auch gemäß der Figur 8 um 90° gedreht, d. h. mit einem Schenkel 26 flächenhaft aufliegend, mit der Tür 2 mit Hilfe von Nieten, Klemmscheiben oder ähnlichen Mitteln befestigt werden. In diesem Fall bietet der gegenüberliegende Schenkel 26 eine Auflage für einen abgebrochen gezeigten Geräteträger 27 und zur Befestigung desselben mittels Schrauben 28. Wie in der Figur 9 angedeutet ist, empfiehlt es sich, zur leichteren Handhabung der Befestigungsmittel wie Niete, Klemmscheiben oder ähnliche Elemente an den Rändern des Abschnittes 25 Aussparungen 30 vorzusehen.

Als weitere geeignete Profilform zeigen die Figuren 10 und 11 U-förmige Abschnitte 31 mit gegenüberliegenden Schenkeln 32, die in jeder der möglichen Stellungen mit der Tür 2 verbunden werden können. Dargestellt ist in der Figur 10 die stirnseitige Anlage der Schenkeln 32 an der Tür 2 und in der Figur 11 die flächenhafte Anlage eines der Schenkel 32.

## Patentansprüche

1. Schaltschrank (1) mit einer an Scharnieren (3) gehaltenen Tür (2) und einem an der Innenseite (15) der Tür (2) angebrachten Versteifungsmittel, zu dessen Befestigung an der Innenseite der Tür (2) Befestigungselemente vorgesehen sind,
**dadurch gekennzeichnet,** daß als Versteifungselement wenigstens nahe der den Scharnieren (3) gegenüberliegenden Kante (5) der Tür (2) ein stabförmiger Abschnitt (7, 23, 24, 25, 31) eines Profilmaterials mit hoher Biegesteifigkeit angebracht ist.

2. Schaltschrank nach Anspruch 1,
**dadurch gekennzeichnet,** daß sich ein stabförmiger Abschnitt (7, 23, 24, 25, 31) des Profilmaterials im wesentlichen über die gesamte Höhe der Tür (2) erstreckt.

3. Schaltschrank nach Anspruch 1 oder 2,
**dadurch gekennzeichnet,** daß nahe der mit den Scharnieren (3) versehenen Kante (4) der Tür (2) ein weiterer stabförmiger Abschnitt (7, 23, 24, 25, 31) des Profilmaterials angebracht ist.

4. Schaltschrank nach einem der Ansprüche 1 bis 3,
**dadurch gekennzeichnet,** daß als Profilmaterial ein Hohlprofil aus Blech dient.

5. Schaltschrank nach einem der Ansprüche 1 bis 3,
**dadurch gekennzeichnet,** daß als Profilmaterial ein winkliges Vollprofil mit zwei parallelen Schenkeln (26; 32) dient, von denen der eine Schenkel (26; 32) zur Auflage an der Türinnenfläche (15) dient und der andere Schenkel (26, 32) zur Auflage eines Geräteträgers o.ä. (11, 12) dient.
